# EUROPÄISCHE PATENTSCHRIFT

(11) **EP 4 246 100 B1**
(45) Veröffentlichungstag und Bekanntmachung des Hinweises auf die Patenterteilung: **06.05.2026**
(21) Anmeldenummer: 23161570.9
(22) Anmeldetag: 13.03.2023
(51) Int. Cl.: G01F 23/296

(54) **VIBRONISCHER GRENZSTANDSENSOR MIT BESCHLEUNIGUNGSSENSOR**
VIBRONIC LIMIT LEVEL SENSOR WITH ACCELERATION SENSOR
CAPTEUR DE NIVEAU LIMITE VIBRONIQUE AVEC CAPTEUR D'ACCÉLÉRATION

(30) Priorität: 14.03.2022 DE 102022105918
(43) Veröffentlichungstag der Anmeldung: 20.09.2023
(73) Patentinhaber: VEGA Grieshaber KG, 77709 Wolfach (DE)
(72) Erfinder: DIETERLE, Levin, 77709 Oberwolfach (DE); BÖRSIG, Jörg, 77709 Oberwolfach (DE)
(74) Vertreter: Maiwald GmbH

(56) Entgegenhaltungen:
- DE-A1- 102012 101 667
- DE-A1- 102018 101 475
- US-B2- 7 934 414
- ZAWAWI SITI AISYAH ET AL: "A Review of MEMS Capacitive Microphones", MICROMACHINES, vol. 11, no. 5, 8 May 2020 (2020-05-08), Switzerland, pages 484, XP093238535, ISSN: 2072-666X, DOI: 10.3390/mi11050484

## Beschreibung

Die vorliegende Anmeldung beansprucht die Priorität der deutschen Patentanmeldung Nr. 10 2022 105 918.9, eingereicht am 14. März 2022.

### Beschreibung

### Stand der Technik

Produktionsprozesse aus Vorgängen zur Verarbeitung von Rohstoffen, wie Mischen, Erhitzen usw. Chargenprozesse werden in der Regel mit industriellen Sensoren überwacht, die Prozessmerkmale wie Druck, Durchfluss oder Füllstand bestimmen. Vibrations-Grenzstandschalter werden zur Detektion von Füllständen bzw. Grenzständen für insbesondere fließfähige Medien, insbesondere bei Flüssigkeiten oder Schüttgütern eingesetzt. Die Vibrations-Grenzstandschalter sind je nach Füllstand in dem Behälter mit einem Medium in Kontakt oder nicht, sodass eine Schwingfrequenz/Dämpfung oder Schwingungsamplitude der Membran bzw. des an der Membran angeordneter mechanischen Schwingers durch den Kontakt mit dem Medium beeinflusst wird.

Die Patentschrift US 7,934,414 B2 beschreibt ein Verfahren zur Herstellung einer Messvorrichtung zur Bestimmung und/oder Überwachung einer Prozessgröße eines Mediums in einem Behälter. Die Messvorrichtung umfasst: Eine mechanisch schwingfähige Einheit, die über eine Befestigung an einem Sensorgehäuse und/oder an dem Behälter befestigbar ist; und eine Treiber-/Empfängereinheit, die die mechanisch schwingfähige Einheit zum Schwingen anregt oder die Schwingungen der mechanisch schwingfähigen Einheit empfängt.

Die Offenlegungsschrift DE 10 2012 101 667 A1 beschreibt ein vibronisches Messgerät zur Bestimmung und/oder Überwachung mindestens einer Prozessgröße eines Mediums in einem Behälter, mit mindestens einer mechanisch schwingfähigen Einheit, mit mindestens einer piezoelektrischen Antriebs-/Empfangseinheit zur Anregung der mechanisch schwingfähigen Einheit zu mechanischen Schwingungen mittels eines elektrischen Anregungssignals und zum Empfangen und Umwandeln von mechanischen Schwingungen in ein elektrisches Empfangssignal, und mit mindestens einer Regel-/Auswerteeinheit.

Die Offenlegungsschrift E 10 2018 101 475 A1 beschreibt eine energieautarke Schwingungsmessvorrichtung eingerichtet zur energieautarken Erfassung von Schwingungsmessdaten an einer Einrichtung, z.B. an einem Container. Als Beschleunigungssensor können insbesondere vorgesehen sein: mikroelektromechanische (MEMS-basierte) Sensoren; piezoelektrische Sensoren; oder eine Kombination daraus.

### Offenbarung der Erfindung

Vibronische Grenzstandsensoren, bzw. Vibrations-Grenzstandsensoren, die ein Medium durch eine Verstimmung eines Schwingsystems detektieren, weisen typischerweise für die Anregung und Auswertung getrennte Piezosysteme zum Anregen und zum Auswerten des Schwingsystems auf, bzw. sind bei Verwendung eines einzigen Piezosystems entsprechend in, insbesondere unterschiedlich polarisierte piezoelektrische, Sektoren aufgeteilt, um ein getrenntes Anregen- und Auswerten des Schwingsystems zu ermöglichen. Solche Systeme können mittels einer Klebeverbindung mit dem Schwingsystem, das ein Schwingelement für eine Wechselwirkung mit einem Medium aufweisen kann, mechanisch gekoppelt sein. Bei der Wechselwirkung mit dem Medium kann das Schwingsystem entsprechend einer Stimmgabel, durch Wechselwirkung mit dem Medium, verstimmt werden, um das Medium zu detektieren. Alternativ können für das Anregen und das Auswerten des Schwingsystems elektromagnetische Systeme verwendet werden. Für eine effektive Anregung des Schwingsystems ist vorteilhaft, ein Piezosystem zu verwenden, welches eine möglichst große Antriebsfläche bzw. eine geringe Sektorierung aufweist.

Gemäß Aspekten der Erfindung wird ein vibronischer Grenzstandsensor gemäß den Merkmalen des unabhängigen Anspruchs vorgeschlagen. Vorteilhafte Ausgestaltungen sind Gegenstand der abhängigen Ansprüche sowie der nachfolgenden Beschreibung.

In dieser gesamten Beschreibung der Erfindung sind einige Merkmale mit Zählwörtern versehen, um die Lesbarkeit zu verbessern oder die Zuordnung eindeutiger zu machen, dies impliziert aber nicht ein Vorhandensein bestimmter Merkmale.

Gemäß einem Aspekt der Erfindung wird ein vibronischer Grenzstandsensor vorgeschlagen, der ein mechanisches Schwingsystem zur Detektion eines Mediums aufweist. Zur Anregung des mechanischen Schwingsystems weist der vibronische Grenzstandsensor einen Antrieb auf, und zur Detektion von Schwingungen des mechanischen Schwingsystems weist der vibronische Grenzstandsensor einen Beschleunigungssensor auf.

Dabei ist der Antrieb mechanisch an das mechanische Schwingsystem gekoppelt. Das mechanische Schwingsystem weist Schwingelemente auf, und der vibronische Grenzstandsensor ist eingerichtet, dass die Schwingelemente mit dem Medium wechselwirken können, um die Frequenz und/oder Amplitude und/oder Dämpfung des mechanischen Schwingsystems durch Wechselwirkung mit dem Medium zu verändern. Der Beschleunigungssensor ist mechanisch mit dem Schwingsystem, insbesondere mit einer Membran und/oder dem Antrieb des Schwingsystems, gekoppelt, um Schwingungen des mechanischen Schwingsystems zu detektieren. Elektrische Signale, die der Beschleunigungssensor generiert, können einer Auswerteeinheit bereitgestellt werden, um ein Signal durch die Auswerteeinheit zu generieren, das abhängig von der Wechselwirkung des mechanischen Schwingsystems mit dem Medium ist.

Der Antrieb ist mit der Membran gekoppelt.

Die Membran des mechanischen Schwingsystems kann direkt angrenzend an den Antrieb des mechanischen Schwingsystems mechanisch gekoppelt sein.

Ein solcher vibronischer Grenzstandsensor kann beispielsweise zur Feststellung und/oder Überwachung eines Füllstands eines Füllguts in einem Behälter dienen. Dazu kann der vibronischer Grenzstandsensor, entsprechend einem Füllstandssensor, ein mechanisches Schwingsystem und ein System zur Anregung des mechanischen Schwingsystems, bzw. einen Antrieb, und ein System zur Detektion von Schwingungen des Schwingsystems, z.B. einen Beschleunigungssensor, aufweisen. Der vibronische Grenzstandsensor kann so, z.B. an einem Behälter, angebracht sein, dass das mechanische Schwingsystem mit dem Füllgut in Berührung kommt, wenn dieses einen vorbestimmten Füllstand erreicht. Durch ein System zur Anregung des mechanischen Schwingsystems zum Beispiel einer Auswerteeinheit kann, insbesondere mittels einer Niederfrequenz-Erregungsschaltung, das mechanische Schwingsystem zu niederfrequenten Schwingung erregt werden, wobei die detektierten Schwingungen mittels einer Auswerteeinheit in Bezug auf eine Frequenzänderung und/oder Amplitudenänderung eine Wechselwirkung des Schwingsystems mit dem Füllgut detektiert werden.

Zur Anregung des mechanischen Schwingsystems können piezoelektrische Antriebe mit einer zu einer Schwingung anregbaren Membran mechanisch gekoppelt sein, und die piezoelektrischen Antriebe können mittels einer Elektronik-Schaltung angesteuert werden, um das mechanische Schwingsystem in Schwingung zu versetzen.

Abhängig von einem Bedeckungsstand des mechanischen Schwingsystems mit einem Medium, wie beispielsweise einem Füllgut, sowie abhängig von einer Viskosität dieses Mediums, kann eine Veränderung einer Schwingung des mechanischen Schwingsystems in Bezug auf eine charakteristische Frequenz und/oder eine Größe einer Amplitude, von dem Beschleunigungssensor detektiert werden. Messsignale, die von dem Beschleunigungssensor, basierend auf den Schwingungen des Schwingsystems, generiert werden, können mittels einer Auswerteeinheit eine Stärke einer solchen Wechselwirkung detektieren.

Ein Antrieb zur Anregung des mechanischen Schwingsystems kann sowohl auf einem piezoelektrischen Wirkprinzip als auch einem elektromechanischen Wirkprinzip basieren.

Der Beschleunigungssensor zur Detektion von Schwingungen des mechanischen Schwingsystems kann in einer Alternative mechanisch mit der Membran gekoppelt sein, dass Schwingungen der Membran auf den Beschleunigungssensor übertragen werden, um Schwingungen der Membran zu detektieren. Dabei ist der Beschleunigungssensor entsprechend einem Mikro-Elektro-mechanischen System (MEMS) aufgebaut und detektiert insbesondere Beschleunigungen basierend auf Kapazitätsveränderungen zwischen Elektroden, die in einem Feder-Masse-System angeordnet sind. Dabei kann der Beschleunigungssensor eingerichtet sein, Winkelgeschwindigkeiten und/oder Drehraten, entsprechend einem Gyroskop, zu detektieren.

Vorteilhafterweise kann durch Verwendung eines solchen Beschleunigungssensors die Detektion von Schwingungen des mechanischen Schwingsystems wirtschaftlich günstig realisiert werden.

Das mechanische Schwingsystem weist eine Membran auf, die, mechanisch schwingfähig, mit dem vibronischen Grenzstandsensor und/oder einem Gehäuse des vibronischen Grenzstandsensor gekoppelt ist. Insbesondere kann das mechanische Schwingsystem einen Schwingelement, bzw. Schwingkörper, aufweisen der mechanisch mit der Membran so gekoppelt ist, dass Schwingungen der Membran auf das Schwingelement übertragen werden. Dabei kann das Schwingelement mehrere Teil-Elemente, insbesondere zwei Teil-Elemente aufweisen, die die mit der Membran so gekoppelt und angeordnet sind, dass die Teil-Elemente mit dem Medium, das detektiert werden soll, wechselwirken können.

Der vibronische Grenzstandsensor weist einen Antrieb, wie insbesondere ein Piezoelement, auf, der für das in Schwingung setzen der Membran die gesamte Fläche der Membran nutzen kann. Durch Wegfall der Sektorierung des Antriebs, die sonst für Anregung und Auswertung der Membranschwingungen notwendig ist, kann, insbesondere mittels eines auf die Membran aufgeklebten Piezoelement-Antriebs, beispielsweise mit einem einzelnen großen Piezoelement, der die gesamte Membranfläche belegt, ein größerer Sektor für die Polarisierung bzw. für die Schwingung-Anregung der Membran verwendet werden, um eine stärkere Amplitude des mechanischen Schwingsystems bei gleichbleibender Anrege-Spannung zu erzielen. Zudem lässt sich ein solches Piezoelement durch Wegfall einer aufwendigen Sektorierung für die Polarisierung auch kostengünstiger produzieren. Darüber hinaus ermöglicht der Beschleunigungssensor des vibronischen Grenzstandsensors eine verbesserte Erfassung der Schwingungen des mechanischen Schwingsystems, so dass die Ansteuerung des Antriebs verbessert werden kann.

Weiterhin vorteilhaft kann durch eine räumliche Trennung des Beschleunigungssensors von einer Auswerteeinheit der Temperaturbereich, in dem der vibronische Grenzstandsensor eingesetzt werden kann, erhöht werden.

Gemäß einem Aspekt wird vorgeschlagen, dass das mechanische Schwingsystem eine Membran aufweist, die schwingfähig ist und der Antrieb mit der Membran gekoppelt ist. Der Beschleunigungssensor ist mit der Membran und/oder dem Antrieb mechanisch gekoppelt, um die Schwingungen zu detektieren.

Dabei kann die Membran selbst einer Elastizität aufweisen und/oder elastisch aufgehängt sein, um mittels des Antriebs zu Schwingungen, insgesamt oder in Teilflächen der Membran, angeregt werden zu können. Der Antrieb kann durch Verklebung oder durch Verschraubung mechanisch mit der Membran gekoppelt sein, um die Membran zu Schwingungen anzuregen. Die Membran kann direkt mit dem Medium wechselwirken, sodass die Detektion eines Mediums möglich wird. Alternativ oder zusätzlich kann die Membran mit einem ausgedehnten Schwingelement, wie beispielsweise einer Schwinggabel mit Zinken, so mechanisch gekoppelt sein, dass eine Schwingung der Membran das Schwingelement in Schwingung versetzt. Das Schwingelement des vibronischen Grenzstandsensors kann so eingerichtet und angeordnet sein, dass es mit dem Medium, beispielsweise in einem Behälter und/oder einem Rohr, wechselwirken kann, sodass eine Frequenz und/oder eine Amplitude des durch den Antrieb angeregten mechanischen Schwingsystems durch die Wechselwirkung mit dem Medium verändert wird.

Gemäß einem Aspekt wird vorgeschlagen, dass der Antrieb auf einem piezoelektrischen Wirkprinzip und/oder einem elektromechanischen Wirkprinzip basiert, und eingerichtet ist, das mechanische Schwingsystem in mechanische Schwingung zu versetzen.

Vorteilhafterweise kann der vibronische Grenzstandsensor sowohl einen Antrieb auf einem piezoelektrischen Wirkprinzip und/oder einem elektromechanischen Wirkprinzip aufweisen und somit unterschiedlichen Betriebsbedingungen und/oder Betriebsanforderungen angepasst werden.

Gemäß einem Aspekt wird vorgeschlagen, dass der vibronische Grenzstandsensor zusätzlich einen piezoelektrischen Detektor und/oder elektromechanischen Detektor zur Detektion von Schwingungen des mechanischen Schwingsystems aufweist.

Der vibronische Grenzstandsensor kann vorteilhafterweise die Schwingungen des mechanischen Schwingsystems mittels eines Beschleunigungssensors und/oder eines piezoelektrischen Detektors und/oder einem elektromechanischen Detektor detektieren. Der piezoelektrische Detektor kann ein Teilsektor eines entsprechend sektorierten Piezosystems sein, der eingerichtet und konfiguriert ist, Schwingungen des mechanischen Schwingsystems zu bestimmen und/oder auszuwerten.

Vorteilhafterweise kann durch die Detektion der Schwingungen des mechanischen Schwingsystems von zumindest zwei Detektoren, die auf einem unterschiedlichen Wirkmechanismus basieren, eine Messsicherheit erhöht werden und/oder Fremdvibrationen erkannt werden und/oder Störmoden detektiert werden, um insbesondere die Detektion der Schwingungen des mechanischen Schwingsystems zu verbessern. Dazu können die Messwerte der zumindest zwei Detektoren mittels unabhängiger Auswertemethoden verglichen werden, um jeweilige Mess-Störungen zu eliminieren. Dies kann insgesamt zu einer deutlich erhöhten Messsicherheit führen. Beispielsweise kann durch einen Beschleunigungssensor der direkt mit dem Antrieb gekoppelt ist, eine Bewegung des Antriebs, wie beispielsweise eines Piezosystems, direkt bestimmt werden, um so durch eine zweite, unabhängige Mess- bzw. Auswertemethode eine Messsicherheit zu erhöhen oder um Fremdvibrationen zu erkennen.

Fremdvibrationen können Schwingungen des mechanischen Schwingsystems sein, die ein Messsignal, mit dem beispielsweise ein Füllstand bestimmt werden soll, verfälschen können.

Mit anderen Worten, können mit dem Beschleunigungssensor, der direkt oder indirekt mechanisch mit dem Schwingsystem gekoppelt ist, die Schwingungen des Schwingsystems mit einem zweiten unabhängigen System kontrolliert und/oder überwacht werden, um eine Messsicherheit für das Messsignal zu erhöhen.

Ein solcher Beschleunigungssensor kann auf eine Fläche eines Flexleiters, der zumindest mit dem Antrieb, wie beispielsweise einem Piezosystem, elektrisch gekoppelt ist, geklebt werden, um direkt mit dem Antrieb und/oder dem mechanischen Schwingsystem gekoppelt zu sein.

Gemäß einem Aspekt wird vorgeschlagen, dass der Beschleunigungssensor mittels einer Schicht direkt angrenzend an den Antrieb angeordnet ist. Insbesondere kann der Antrieb ein piezoelektrisches Wirkprinzip aufweisen.

Eine solche Schicht kann beispielsweise eine Klebstoffschicht sein, die den Beschleunigungssensor direkt angrenzend an den Antrieb mechanisch ankoppelt. Alternativ oder zusätzlich kann die Schicht Teil-Schichten aufweisen, wobei eine der Teil-Schichten ein zur elektrischen Kopplung mit dem Beschleunigungssensor und/oder dem Antrieb verwendetes flaches Flexkabel ist, das mit einer Klebeschicht direkt angrenzend an den Antrieb mechanisch gekoppelt ist, und mit einer weiteren Klebeschicht direkt angrenzend an den Beschleunigungssensor gekoppelt ist. Dadurch kann das Flexkabel den Antrieb mit dem Beschleunigungssensor mechanisch koppeln.

Vorteilhafterweise ergibt sich dadurch ein stabiler und einfacher Aufbau. Das Flexkabel kann eingerichtet sein, elektrisch und/oder signalmäßig mit dem Antrieb gekoppelt zu sein. Das Flexkabel kann alternativ oder zusätzlich eingerichtet sein, elektrisch und/oder signalmäßig mit dem Beschleunigungssensor gekoppelt zu sein.

Gemäß einem Aspekt wird vorgeschlagen, dass die Schicht eine erste Klebeschicht und insbesondere die Schicht ein Teilbereich eines flachen Flexkabels mit der ersten Klebeschicht und einer zweiten Klebeschicht ist.

Dieser Teilbereich des flachen Flexkabel kann eingerichtet sein, das Flexkabel elektrisch mit einem Kontakt an einer Oberseite des Flexkabels und/oder mit einem Kontakt an der Unterseite des Flexkabels zu koppeln.

Gemäß einem Aspekt wird vorgeschlagen, dass das flache Flexkabel elektrisch und/oder signalmäßig mit dem Beschleunigungssensor und/oder dem Antrieb gekoppelt ist.

Alternativ oder zusätzlich kann der Beschleunigungssensor und/oder der Antrieb mit einem Kabel anderer Bauweise, das mehrere unabhängig, insbesondere elektrisch gegeneinander isolierte, elektrisch leitfähige Verbindungsstränge, aufweist, gekoppelt sein. Dieses Kabel anderer Bauweise kann, entsprechend dem flachen Flexkabel, elektrisch mit einer Auswerteeinheit gekoppelt sein.

Gemäß einer zweiten Alternative ist der Beschleunigungssensor mittels eines Steges mit der Schwingmembran und/oder dem Antrieb an einer ersten Position des Stegs gekoppelt, um den Beschleunigungssensor beabstandet von der Schwingmembran und/oder dem Antrieb anzuordnen.

Vorteilhafterweise kann durch den Steg eine thermische Entkopplung der schwingfähigen Membran, die in einen direkten Kontakt mit dem zu detektierenden Medium kommen kann, erreicht werden.

Somit sind auch höhere Prozesstemperaturen bei einem Einsatz des vibronischen Grenzstandsensors 100, 200 möglich, ohne einen vom Hersteller spezifizierten Temperaturbereich für den Beschleunigungssensor 120 zu verlassen.

Dadurch, dass der Beschleunigungssensor mittels des Stegs in einem Abstand vom Antrieb und/oder der Membran angeordnet ist, kann der Beschleunigungssensor laterale Beschleunigungen parallel zu der Schwingmembran nachweisen, die auf Störmoden der mechanischen Schwingung zurückzuführen sind, und insbesondere auf Schwingungsknoten im Zentrum der Membran basieren. Dabei kann eine Schwingung des Schwingsystems senkrecht zur Membran als das Hauptsignal angesehen werden, und durch die Detektion der Störmoden kann das Hauptsignal mittels der Auswerteeinheit, durch Berücksichtigung der Störmoden, verbessert werden.

Gemäß einem Aspekt wird vorgeschlagen, dass der Steg ein Material geringer thermischer Leitfähigkeit aufweist, um den Beschleunigungssensor vor hohen Temperaturen der Membran zu schützen.

Gemäß einem Aspekt wird vorgeschlagen, dass der Steg, mittels elektrisch leitfähigen Verbindungen, eingerichtet ist, den Beschleunigungssensor elektrisch und/oder signalmäßig mit einer Auswerteeinheit zu koppeln.

Vorteilhafterweise kann mit einem Steg, der elektrisch leitfähige Verbindungen aufweist, ein einfacher Aufbau des vibronischen Grenzstandsensor erreicht werden, der mechanisch stabil ist. Beispielsweise können die leitfähigen Verbindungen an einer Außenseite oder im Inneren des Steges angeordnet sein.

Gemäß einem Aspekt wird vorgeschlagen, dass der Steg mittels einer Spritzguss-Verbindungsvorrichtung (MID) eingerichtet ist, den Beschleunigungssensor elektrisch mit der Auswerteeinheit zu koppeln.

Vorteilhafterweise können die elektrisch leitfähigen Verbindungen einfach und stabil mittels einer Spritzguss-Verbindungvorrichtung bereitgestellt werden, um den Beschleunigungssensor elektrisch und/oder signalmäßig mit einer Auswerteeinheit zu koppeln. Insbesondere kann die elektrisch leitfähige Verbindung des Steges elektrisch und/oder mechanisch an das flache Flexkabel gekoppelt sein, um den Beschleunigungssensor elektrisch und oder signalmäßig mit der Auswerteeinheit zu koppeln. Die Auswerteeinheit kann elektrisch und/oder signalmäßig mit dem Flexkabel gekoppelt sein.

Gemäß einem Aspekt wird vorgeschlagen, dass der Steg mittels einer Schicht direkt angrenzend an den Antrieb angeordnet ist und die Schicht eine erste Klebeschicht und insbesondere die Schicht ein Teilbereich eines flachen Flexkabels mit der ersten Klebeschicht und einer zweiten Klebeschicht ist. Die elektrisch leitfähigen Verbindungen des Steges können elektrisch und/oder signalmäßig mit dem flachen Flexkabel gekoppelt sein.

Vorteilhafterweise ermöglicht dieser Aufbau des vibronischen Grenzstandsensors eine stabile und wirtschaftlich günstige Lösung.

Gemäß einem Aspekt wird vorgeschlagen, dass der vibronische Grenzstandsensor ein Gehäuse aufweist und der Steg mit dem Gehäuse des vibronischen Grenzstandsensor an einer zweiten Position des Stegs mechanisch gekoppelt ist, um den Steg abzustützen und/oder Störmoden des Schwingsystems zu unterdrücken.

Durch eine solche Kopplung des Steges an der zweiten Position mit dem Gehäuse kann der Aufbau des vibronischen Grenzstandsensor mit einem Steg stabilisiert werden, um den vibronischen Grenzstandsensor robust aufzubauen. Zusätzlich oder alternativ kann durch eine entsprechende mechanische Kopplung des Steges an der zweiten Position mit dem Gehäuse erreicht werden, dass mechanische Störmoden des Schwingsystems gedämpft werden und die nachzuweisende Schwingung des Schwingsystems gegenüber Störmoden hervorgehoben wird. D. h., dass dadurch Störmoden eine geringere mechanische Amplitude aufweisen als die nachzuweisende Schwingung des Schwingsystems.

Eine solche Kopplung kann beispielsweise durch, insbesondere 3 bis 4, elastische Edelstahlstege geeigneter Stärke, von insbesondere 0,5 bis 1,1 mm erreicht werden.

Gemäß einem Aspekt wird vorgeschlagen, dass der Steg an der zweiten Position mittels thermisch leitfähiger Stütz-Stege mechanisch gekoppelt ist, um Wärme an das Gehäuse abzuleiten.

Ein zusätzlicher Nutzen der mechanischen Kopplung des Steges mit dem Gehäuse kann eine Ableitung von Wärme, die von der Membran über den Steg an den Beschleunigungssensor geleitet wird, an das Gehäuse sein.

Gemäß einem Aspekt wird vorgeschlagen, dass der vibronische Grenzstandsensor eine von dem Beschleunigungssensor abgesetzten Auswerteeinheit aufweist, die mit dem Beschleunigungssensor elektrisch und/oder signalmäßig gekoppelt ist, und eingerichtet ist, durch Bestimmung einer Veränderung einer Frequenz der Schwingung und/oder einer Amplitude der Schwingung des Schwingsystems das Medium zu detektieren.

Die Auswerteeinheit kann dabei eingerichtet sein, sowohl das Signal vom Beschleunigungssensor auszuwerten und damit ein Signal zu generieren, dass abhängig von der Wechselwirkung des Schwingsystems mit dem Medium ist, um das Medium zu detektieren. Zusätzlich oder alternativ kann die Auswerteeinheit eingerichtet sein, insbesondere entsprechende einer Steuerung und/oder Regelung, abhängig von dem Signal des Beschleunigungssensors, ein Anregungssignal für den Antrieb der Schwingsystems bereitzustellen. Dieses Anregungssignal kann über das Flexkabel elektrisch mit dem Antrieb gekoppelt sein. Die Auswertung und Regelung und/oder Steuerung der Anregung des Piezoantriebes erfolgt durch Auswerten der durch den Beschleunigungssensor gemessenen Beschleunigungswerte.

Beispielsweise kann eine Regelung der Anrege-Frequenz auf einem Phasenversatz, zwischen einem Anregesignal für den Antrieb und einer mechanischen Antwort, die aus dem Signal des Beschleunigungssensors resultiert, basieren. Alternativ oder zusätzlich kann auch eine Auswertung des Signals des Beschleunigungssensors mittels einer Fouriertransformation (FFT: fast fourier transformation) eines gemessenen Zeitsignales des Beschleunigungssensors in einen Frequenzbereich erfolgen. Vorteilhafterweise kann der vibronische Grenzstandsensor mittels der abgesetzten Auswerteeinheit robuster, insbesondere gegenüber thermischen Veränderungen, ausgestaltet werden.

Gemäß einem Aspekt wird vorgeschlagen, dass der Beschleunigungssensor eingerichtet ist, Beschleunigungen in zwei Dimensionen oder drei Dimensionen zu detektieren und die Auswerteeinheit eingerichtet ist, die Beschleunigungen in zwei Dimensionen oder drei Dimensionen auszuwerten, um die Störmoden des Schwingsystems zu identifizieren.

Störmoden, welche im Zentrum der Membran einen Schwingungsknoten und somit eine Verkippung des Steges verursachen, erzeugen durch den mechanischen Hebel des Steges, eine Verkippung des Steges. Der Beschleunigungssensor, welcher auf der von der Membran abgewandten Seite des Steges montiert ist, erfährt durch die Verkippung des Steges Beschleunigungen in eine Richtung parallel zu der Membran und/oder dem Antrieb, die durch eine entsprechende Auslenkung des Beschleunigungssensors detektiert werden kann. Mittels der so detektieren Störmoden, kann ein Einfluss der Störmoden, bzw. Fremdvibrationen, durch eine Berücksichtigung bei der Auswertung mittels der Auswerteeinheit, vermindert werden.

Es wird eine Verwendung des oben beschriebenen vibronischen Grenzstandsensors zur Prozesskontrolle vorgeschlagen.

### Ausführungsbeispiele

Ausführungsbeispiele der Erfindung werden mit Bezug auf die Figuren 1 bis 3 dargestellt und im Folgenden näher erläutert. Es zeigt:
- Figur 1: eine schematische Skizze eines Querschnitts eines vibronischen Grenzstandsensors;
- Figur 2: eine schematische Skizze eines Querschnitts eines vibronischen Grenzstandsensors mit Steg; und
- Figur 3: eine schematische Skizze eines Querschnitts eines vibronischen Grenzstandsensors mit Steg und Stütz-Steg.

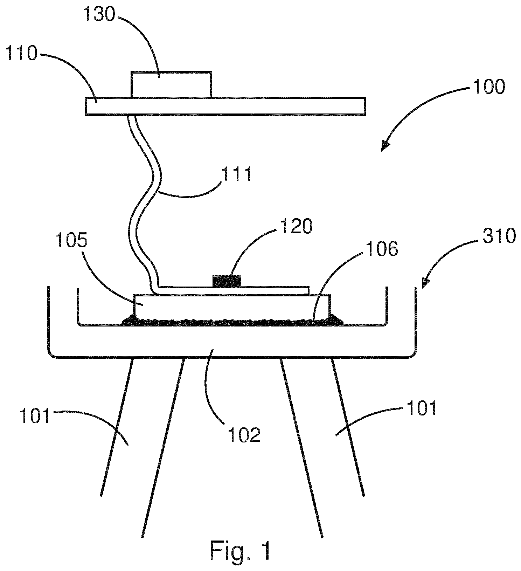

Die Figur 1 skizziert schematisch einen Querschnitt eines vibronischen Grenzstandsensors 100, mit einem mechanischen Schwingsystem, dass eine Membran 102 und eine Schwinggabel 101 als Schwingelement, insbesondere mit Zinken in Paddelgeometrie, aufweist, zur Detektion eines Mediums. Dabei kann das Schwingelement mit einem Medium wechselwirken, um Änderungen in der Frequenz und/oder Amplitude der Schwingungen des mechanischen Schwingsystems zu bewirken.

Der vibronische Grenzstandsensor 100 weist weiterhin einen Antrieb 105 in Form eines Piezoelementes zur Anregung des mechanischen Schwingsystems auf. Weiterhin weist der vibronische Grenzstandsensor 100 einen Beschleunigungssensor 120 zur Detektion von Schwingungen des mechanischen Schwingsystems auf. Das Piezoelement 105 ist mittels eines Klebstoffes 106 mechanisch mit der Membran 102 verbunden. Um das Medium zu detektieren, können die Schwingungen des mechanischen Schwingsystems mit dem Beschleunigungssensor 120 detektiert werden und die Signale des Beschleunigungssensor 120 können elektrisch über ein Flexkabel 111 zu einer Auswerteeinheit 110 übertragen werden, wobei die Auswerteeinheit 110 einen Mikroprozessor 130 zur Auswertung der Signale vom Beschleunigungssensor 120 aufweist. Die Auswerteeinheit 110 ist somit abgesetzt von dem Beschleunigungssensor 120 angeordnet.

Weiterhin ist das Piezoelement als Antrieb 105 des mechanischen Schwingsystems mit dem Flexkabel 111 elektrisch gekoppelt und die Auswerteeinheit 110 ist mit dem Flexkabel elektrisch gekoppelt und eingerichtet, für das Piezoelement elektrische Signale zur Schwingungsanregung des mechanischen Schwingsystems bereitzustellen. Das Signal des Beschleunigungssensors 120 kann zusätzlich verwendet werden, um das Anregungssignal für den Antrieb 105 zu regeln, um beispielsweise das Schwingsystem unabhängig von der Wechselwirkung mit einem Medium immer auf einer Anregungsfrequenz, insbesondere seiner Resonanzfrequenz, anzuregen.

Die elektrische Kopplung zwischen dem Flexkabel 111 und dem Antrieb 105 kann mittels einer Lotverbindung und/oder einer elektrisch leitfähigen Klebeverbindung erfolgen. D. h. mit anderen Worten, das Flexkabel 111 koppelt sowohl den Beschleunigungssensor 120 als auch den Antrieb 105 mit der Auswerteeinheit 110. Der Beschleunigungssensor kann hierbei direkt angrenzend an das Piezoelement angeordnet sein, auf das er aufgeklebt ist oder aber wie in der Figur 1 auf einen Anschlussbereich des Flexkabels 111 aufgelötet sein. Alternativ kann der Beschleunigungssensor 120 auch direkt mit der Membran gekoppelt sein, insbesondere indem der Beschleunigungssensor 120 auf die Membran 102 aufgeklebt ist, um die Schwingungen des mechanischen Schwingsystems zu detektieren.

Eine Energieversorgung des Beschleunigungssensors 120 kann über das Flexkabel 111 von der Auswerteeinheit bereitgestellt werden.

Die Auswerteeinheit 110 ist dabei eingerichtet, sowohl das Anregungssignal für den Antrieb, insbesondere geregelt mit einem, insbesondere digitalen, Signal des Beschleunigungssensors 120, bereitzustellen, als auch ein Auswertesignal, das von der Auswerteeinheit 110 mittels der Signale vom Beschleunigungssensor 120, insbesondere mittels eines Mikroprozessors 130, generiert wird, wobei das Auswertesignal eine Information über die Detektion eines Mediums mit dem Schwingsystem repräsentiert.

Dabei kann der Antrieb des vibronischen Grenzstandsensors mittels einer Klebeschicht 106 mit der Membran 102 gekoppelt sein.

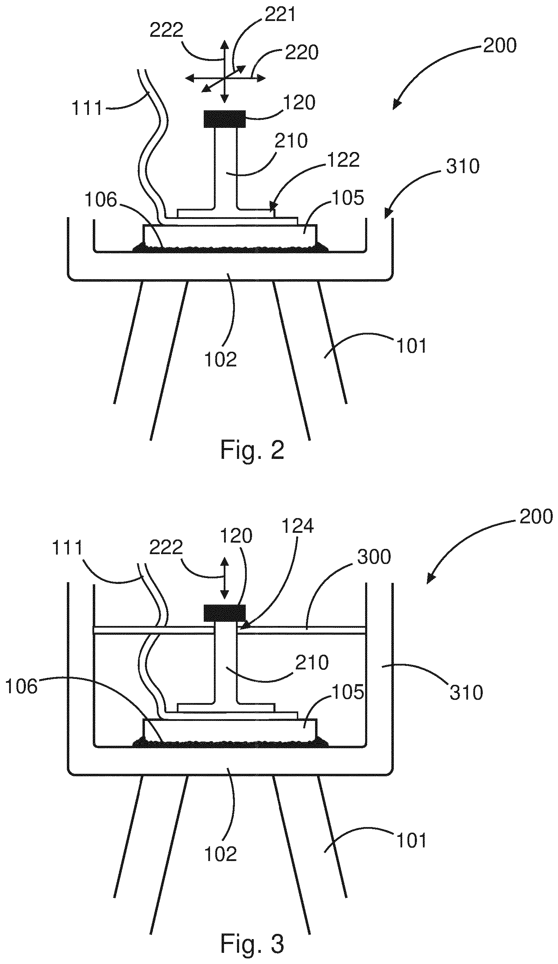

Figur 2 skizziert schematisch einen Querschnitt eines vibronischen Grenzstandsensors 200 der weitgehend dem oben beschriebenen vibronischen Grenzstandsensor 100 entspricht, wobei der Beschleunigungssensor 120 aber mittels eines Steges 210 mit der Schwingmembran 102 und/oder dem Antrieb 106 an einer ersten Position des Stegs 122 gekoppelt ist, um den Beschleunigungssensor 120, beabstandet von der Schwingmembran 102 und/oder dem Antrieb 105, anzuordnen. Dabei kann der Steg an der ersten Position 122 direkt mit dem Antrieb 105 mechanisch, beispielsweise durch eine Klebung, gekoppelt sein.

Weiterhin ist in der Figur 2 mit den Pfeilen 220, 221 und 222 angedeutet, in welche Raumrichtungen der Beschleunigungssensor 120 bewegt werden kann. Der Beschleunigungssensor 120 kann eingerichtet sein, all diese drei Raumrichtungen zu detektieren und entsprechend unabhängige Signale für die Auswerteeinheit 110, zum Beispiel mittels des Flexkabels 111, bereitzustellen.

Mittels des Stegs 210 kann der Beschleunigungssensor 120 thermisch von dem Antrieb 105 und/oder der Membran 102 thermisch entkoppelt sein. Um die thermische Entkopplung weiter zu verbessern, kann der Steg 210 ein Material aufweisen, das eine geringe thermische Leitfähigkeit hat.

Somit sind auch höhere Prozesstemperaturen bei einem Einsatz des vibronischen Grenzstandsensors 100, 200 möglich, ohne einen vom Hersteller spezifizierten Temperaturbereich für den Beschleunigungssensor 120 zu verlassen.

Dadurch, dass der Beschleunigungssensor 120 mittels des Stegs 210 in einem Abstand vom Antrieb 105 und/oder der Membran 102 angeordnet ist, kann der Beschleunigungssensor 120 laterale Beschleunigungen X, Y, 220, 221 parallel zu der Schwingmembran 102 nachweisen, die auf Störmoden der mechanischen Schwingung zurückzuführen sind, und insbesondere auf Schwingungsknoten im Zentrum der Membran basieren. Dabei kann eine Schwingung Z, 222 des Schwingsystems senkrecht zur Membran 102 als das Hauptsignal angesehen werden, und durch die Detektion der Störmoden kann das Hauptsignal mittels der Auswerteeinheit 110, durch Berücksichtigung der Störmoden, verbessert werden.

Figur 3 skizziert schematisch einen Querschnitt eines vibronischen Grenzstandsensor 200, der dem in der Figur 2 beschriebenen vibronischen Grenzstandsensor 200 entspricht, bei dem aber zusätzlich der Steg 210 mit einem Gehäuse 310 des vibronischen Grenzstandsensors 200 an einer zweiten Position des Stegs 124 mechanisch gekoppelt ist, um den Steg 210 abzustützen und/oder Störmoden des Schwingsystems zu unterdrücken. Mittels einer seitlichen Abstützung 300, die den Steg 210 an der zweiten Position mit dem Gehäuse 310 bzw. der Gehäusewandung, mechanisch koppelt, können auftretende Störmoden, der Schwingung des Schwingsystems, welche eine laterale Auslenkung des Beschleunigungssensors zur Folge hätte, unterdrückt bzw. gedämpft werden. Eine solche seitliche Abstützung 300 kann beispielsweise durch eine Anzahl von elastischen und/oder elastisch gekoppelten Drähten realisiert werden.

In den vorliegenden Ausführungsbeispielen sind zur Verbesserung der Darstellung lediglich geklebte Piezoantriebe mit einem Piezoelement skizziert. Der vibronische Grenzstandsensor kann alternativ oder zusätzlich geschraubte piezoelektrische Antriebe oder auch induktive Antriebe aufweisen, deren Schwingungszustand mittels eines von der Auswerteeinheit räumlich abgesetzten Beschleunigungssensors ausgewertet werden kann.

## Patentansprüche

1. Vibronischer Grenzstandsensor (100, 200), mit
einem mechanischen Schwingsystem zur Detektion eines Mediums; wobei das mechanische Schwingsystem eine Membran (102) aufweist, die schwingfähig ist; und wobei die Membran des Grenzstandsensors eingerichtet ist, mit einer Seite der Membran in Kontakt mit dem Medium zu kommen;
einem Antrieb (105) zur Anregung des mechanischen Schwingsystems; und wobei der Antrieb mit der Membran (102) gekoppelt ist; und
einem Beschleunigungssensor (120) zur Detektion von Schwingungen des mechanischen Schwingsystems; wobei der Beschleunigungssensor (120) mittels einer Schicht direkt angrenzend an den Antrieb (105) und/oder direkt angrenzend an die schwingfähige Membran (102) angeordnet ist; oder wobei der Beschleunigungssensor (120) mittels eines Steges (210) mit der Schwingmembran (102) und/oder dem Antrieb (105) an einer ersten Position des Stegs (122) gekoppelt ist, um den Beschleunigungssensor (120) beabstandet von der Schwingmembran (102) und/oder dem Antrieb (105) anzuordnen; und wobei der Beschleunigungssensor (120) auf der dem Medium gegenüberliegenden Seite der Membran (102) angeordnet ist; und wobei der Beschleunigungssensor (120) mit der Membran (102) und/oder dem Antrieb (105) mechanisch gekoppelt ist,
**dadurch gekennzeichnet, dass** der Beschleunigungssensor (120) entsprechend einem Mikro-Elektromechanischen System, MEMS, aufgebaut ist und konfiguriert ist, mittels der detektierten Schwingungen des mechanischen Schwingsystems das Medium zu detektieren.

2. Vibronischer Grenzstandsensor (100, 200) gemäß Anspruch 1, wobei der Beschleunigungssensor Beschleunigungen basierend auf Kapazitätsveränderungen zwischen Elektroden, die in einem Feder-Masse-System angeordnet sind, detektiert.

3. Vibronischer Grenzstandsensor (100, 200) gemäß einem der vorangehenden Ansprüche, wobei der Antrieb (105) auf einem piezoelektrischen Wirkprinzip und/oder CGS:veb einem elektromechanischen Wirkprinzip basiert, und eingerichtet ist, das mechanische Schwingsystem in mechanische Schwingung zu versetzen.

4. Vibronischer Grenzstandsensor (100, 200) gemäß einem der vorangehenden Ansprüche, mit
einem piezoelektrischen Detektor und/oder elektromechanischen Detektor zur Detektion von Schwingungen des mechanischen Schwingsystems.

5. Vibronischer Grenzstandsensor (100, 200) gemäß einem der vorangehenden Ansprüche, wobei der Beschleunigungssensor (120) mittels einer Schicht direkt angrenzend an den Antrieb (105) und/oder direkt angrenzend an die schwingfähige Membran (102) angeordnet ist; und wobei der Antrieb (105) ein piezoelektrisches Wirkprinzip aufweist.

6. Vibronischer Grenzstandsensor (100, 200) gemäß Anspruch 5, wobei die Schicht eine erste Klebeschicht und insbesondere die Schicht ein Teilbereich eines flachen Flexkabels (111) mit der ersten Klebeschicht und einer zweiten Klebeschicht ist.

7. Vibronischer Grenzstandsensor (100, 200) gemäß Anspruch 6, wobei das flache Flexkabel (111) elektrisch und/oder signalmäßig mit dem Beschleunigungssensor (120) und/oder dem Antrieb (105) gekoppelt ist.

8. Vibronischer Grenzstandsensor (100, 200) gemäß Anspruch 1, wobei der Steg (210) ein Material geringer thermischer Leitfähigkeit aufweist, um den Beschleunigungssensor (120) vor hohen Temperaturen der Membran (102) zu schützen.

9. Vibronischer Grenzstandsensor (100, 200) gemäß Anspruch 1 oder 8, wobei der Steg (210), mittels elektrisch leitfähigen Verbindungen, eingerichtet ist, den Beschleunigungssensor (120) elektrisch und/oder signalmäßig mit einer Auswerteeinheit (110) zu koppeln.

10. Vibronischer Grenzstandsensor (100, 200) gemäß Anspruch 9, wobei der Steg (120) mittels einer Spritzguss-Verbindungsvorrichtung (MID) eingerichtet ist, den Beschleunigungssensor (120) elektrisch mit der Auswerteeinheit (110) zu koppeln.

11. Vibronischer Grenzstandsensor (100, 200) gemäß einem der Ansprüche 7 bis 9, der ein Gehäuse (310) aufweist, und wobei der Steg (210) mit dem Gehäuse (310) des vibronischen Grenzstandsensors (100, 200) an einer zweiten Position des Stegs (124) mechanisch gekoppelt ist, um den Steg (210) abzustützen und/oder Störmoden des Schwingsystems zu unterdrücken.

12. Vibronischer Grenzstandsensor (100, 200) gemäß Anspruch 10, wobei der Steg (210) an der zweiten Position (124) mittels thermisch leitfähiger Stütz-Stege (300) mechanisch gekoppelt ist, um Wärme an das Gehäuse (310) abzuleiten.

13. Vibronischer Grenzstandsensor (100, 200) gemäß einem der vorhergehenden Ansprüche, mit einer von dem Beschleunigungssensor (120) abgesetzten Auswerteeinheit (110), die mit dem Beschleunigungssensor (120) elektrisch und/oder signalmäßig gekoppelt ist, und eingerichtet ist, durch Bestimmung einer Veränderung einer Frequenz der Schwingung und/oder einer Amplitude der Schwingung des Schwingsystems das Medium zu detektieren.

14. Vibronischer Grenzstandsensor (100, 200) gemäß Anspruch 13, wobei der Beschleunigungssensor (120) eingerichtet ist, Beschleunigungen in zwei Dimensionen oder drei Dimensionen zu detektieren; und die Auswerteeinheit (110) eingerichtet ist, die Beschleunigungen in zwei Dimensionen oder drei Dimensionen auszuwerten, um die Störmoden des Schwingsystems zu identifizieren.

## Claims

1. Vibronic limit level sensor (100, 200), comprising
a mechanical oscillation system for detecting a medium; wherein the mechanical oscillation system comprises an oscillating membrane (102) capable of oscillating; and wherein the membrane of the limit level sensor is configured such that one side of the membrane comes into contact with the medium;
a drive (105) for exciting the mechanical oscillation system; and wherein the drive is coupled to the membrane (102); and
an accelerometer (120) for detecting oscillations of the mechanical oscillation system; wherein the accelerometer (120) is arranged by means of a layer directly adjacent to the drive (105) and/or directly adjacent to the oscillating membrane (102); or wherein the accelerometer (120) is coupled by means of a web (210) to the oscillating membrane (102) and/or the drive (105) via a web (210) at a first position of the web (122) in order to position the accelerometer (120) spaced apart from the oscillating membrane (102) and/or the drive (105); and wherein the accelerometer (120) is arranged on the side of the membrane (102) facing the medium; and wherein the accelerometer (120) is mechanically coupled to the membrane (102) and/or the drive (105), **characterized in that** the accelerometer is constructed according to a micro-electro-mechanical system, MEMS, and is configured to detect the medium by means of the detected oscillations of the mechanical oscillation system.

2. Vibronic level sensor (100, 200) according to claim 1, wherein the accelerometer detects accelerations based on capacitance changes between electrodes arranged in a spring-mass-system.

3. Vibronic limit level sensor (100, 200) according to one of the preceding claims, wherein the drive (105) is based on a piezoelectric operating principle and/or an electromechanical operating principle, and is configured to set the mechanical oscillation system into mechanical oscillation.

4. Vibronic limit level sensor (100, 200) according to one of the preceding claims, comprising
a piezoelectric detector and/or an electromechanical detector for detecting oscillations of the mechanical oscillation system.

5. Vibronic limit level sensor (100, 200) according to one of the preceding claims, wherein the accelerometer (120) is arranged by means of a layer directly adjacent to the actuator (105) and/or directly adjacent to the vibrating membrane (102); and wherein the actuator (105) operates on a piezoelectric principle.

6. Vibronic limit level sensor (100, 200) according to claim 5, wherein the layer is a first adhesive layer and, in particular, the layer is a portion of a flat flexible cable (111) comprising the first adhesive layer and a second adhesive layer.

7. Vibronic limit level sensor (100, 200) according to claim 6, wherein the flat flexible cable (111) is electrically and/or signal-wise coupled to the accelerometer (120) and/or the actuator (105).

8. Vibronic limit level sensor (100, 200) according to claim 1, wherein the web (210) comprises a material of low thermal conductivity to protect the accelerometer (120) from high temperatures of the membrane (102).

9. Vibronic limit level sensor (100, 200) according to claim 1 or 8, wherein the web (210) is configured, by means of electrically conductive connections, to couple the accelerometer (120) electrically and/or signal-wise to an evaluation unit (110).

10. Vibronic limit level sensor (100, 200) according to claim 9, wherein the web (120) is configured to electrically couple the accelerometer (120) to the evaluation unit (110) by means of an injection-molded interconnect (MID).

11. Vibronic limit level sensor (100, 200) according to any one of claims 7 to 9, comprising a housing (310), and wherein the web (210) is mechanically coupled to the housing (310) of the vibronic limit level sensor (100, 200) at a second position of the web (124) to support the web (210) and/or suppress disturbance modes of the oscillatory system.

12. Vibronic limit level sensor (100, 200) according to claim 10, wherein the web (210) is mechanically coupled at the second position (124) by means of thermally conductive support webs (300) to dissipate heat to the housing (310).

13. Vibronic limit level sensor (100, 200) according to one of the preceding claims, comprising an evaluation unit (110) located separately from the accelerometer (120), which is electrically and/or signal-wise coupled to the accelerometer (120), and is configured to detect the medium by determining a change in a frequency of the oscillation and/or an amplitude of the oscillation of the oscillating system.

14. Vibronic limit level sensor (100, 200) according to claim 13, wherein the acceleration sensor (120) is configured to detect accelerations in two dimensions or three dimensions; and the evaluation unit (110) is configured to evaluate the accelerations in two dimensions or three dimensions in order to identify the disturbance modes of the vibrating system.

## Revendications

1. Capteur de niveau limite vibronique (100, 200), comportant :
un système vibrant mécanique pour la détection d'un milieu ; dans lequel le système vibrant mécanique comporte une membrane (102) apte à vibrer ; et dans lequel la membrane du capteur de niveau limite est configurée pour venir en contact avec le milieu par un côté de la membrane ;
un entraînement (105) pour exciter le système vibrant mécanique ; et dans lequel l'entraînement est couplé à la membrane (102) ; et
un capteur d'accélération (120) pour détecter des vibrations du système vibrant mécanique ; dans lequel le capteur d'accélération (120) est placé, au moyen d'une couche, directement adjacent à l'entraînement (105) et/ou directement adjacent à la membrane apte à vibrer (102) ; ou dans lequel le capteur d'accélération (120) est couplé au moyen d'une tige (210) à la membrane apte à vibrer (102) et/ou à l'entraînement (105) à une première position (122) de la tige afin de placer le capteur d'accélération (120) à distance de la membrane apte à vibrer (102) et/ou de l'entraînement (105) ; et dans lequel le capteur d'accélération (120) est placé du côté de la membrane (102) opposé au milieu ; et dans lequel le capteur d'accélération (120) est mécaniquement couplé à la membrane (102) et/ou à l'entraînement (105),
**caractérisé en ce que** le capteur d'accélération (120) est structuré selon un système micro-électromécanique, MEMS, et est configuré pour détecter le milieu au moyen des vibrations détectées du système vibrant mécanique.

2. Capteur de niveau limite viibronique (100, 200) selon la revendication 1, dans lequel le capteur d'accélération détecte des accélérations sur la base de variations de capacité entre des électrodes qui sont placées dans un système de masse-ressort.

3. Capteur de niveau limite vibronique (100, 200) selon l'une des revendications précédentes, dans lequel l'entraînement (105) est basé sur un principe de fonctionnement piézoélectrique et/ou un principe de fonctionnement électromécanique et est configuré pour entraîner une vibration du système vibrant mécanique.

4. Capteur de niveau limite vibronique (100, 200) selon l'une des revendications précédentes, comportant un détecteur piézoélectrique et/ou un détecteur électromécanique pour détecter des vibrations du système vibrant mécanique.

5. Capteur de niveau limite vibronique (100, 200) selon l'une des revendications précédentes, dans lequel le capteur d'accélération (120) est placé, au moyen d'une couche, directement adjacent à l'entraînement (105) et/ou directement adjacent à la membrane apte à vibrer (102), et dans lequel l'entraînement (105) présente un principe de fonctionnement piézoélectrique.

6. Capteur de niveau limite vibronique (100, 200) selon la revendication 5, dans lequel la couche est une première couche de colle et est en particulier une zone partielle d'un câble souple plat (111) comportant la première couche de colle et une seconde couche de colle.

7. Capteur de niveau limite vibronique (100, 200) selon la revendication 6, dans lequel le câble souple plat (111) est couplé électriquement et/ou par signal au capteur d'accélération (120) et/ou à l'entraînement (105).

8. Capteur de niveau limite vibronique (100, 200) selon la revendication 1, dans lequel la tige (210) comporte un matériau de faible thermoconductivité afin de protéger le capteur d'accélération (120) de températures élevées de la membrane (102).

9. Capteur de niveau limite vibronique (100, 200) selon la revendication 1 ou 8, dans lequel la tige (210), au moyen de liaisons électroconductrices, est configuré pour coupler le capteur d'accélération (120) électriquement et/ou par signal à une unité d'évaluation (110).

10. Capteur de niveau limite vibronique (100, 200) selon la revendication 9, dans lequel la tige (120), au moyen d'un dispositif de liaison par moulage par injection (MID), est configuré pour coupler électriquement le capteur d'accélération (120) à l'unité d'évaluation (110).

11. Capteur de niveau limite vibronique (100, 200) selon l'une des revendications 7 à 9, qui comporte un boîtier (310) et dans lequel la tige (210) est mécaniquement couplée au boîtier (310) du capteur de niveau limite vibronique (100, 200) à une seconde position (124) de la tige afin de soutenir la tige (210) et/ou de supprimer des modes parasites du système vibrant.

12. Capteur de niveau limite vibronique (100, 200) selon la revendication 10, dans lequel la tige (210) à la seconde position (124) est mécaniquement couplé au moyen de tiges de support thermoconductrices (300) afin de dissiper la chaleur vers le boîtier (310).

13. Capteur de niveau limite vibronique (100, 200) selon l'une des revendications précédentes, comportant une unité d'évaluation (110) à distance du capteur d'accélération (120), qui est couplée électriquement et/ou par signal au capteur d'accélération (120) et est configurée pour détecter le milieu en déterminant une variation d'une fréquence de la vibration et/ou d'une amplitude de la vibration du système vibrant.

14. Capteur de niveau limite vibronique (100, 200) selon la revendication 13, dans lequel le capteur d'accélération (120) est configuré pour détecter des accélérations dans deux ou trois dimensions ; et l'unité d'évaluation (110) est configurée pour évaluer les accélérations dans deux ou trois dimensions afin d'identifier les modes parasites du système vibrant.
